# EUROPEAN PATENT APPLICATION

(11) **EP 3 412 355 A1**
(43) Date of publication of application: **12.12.2018**
(21) Application number: 17473001.0
(22) Date of filing: 28.06.2017
(51) Int. Cl.: B01D 46/24, B01D 41/04, B01D 46/00, F01N 3/023

(54) **DEVICE AND METHOD FOR CLEANING FILTERS FOR SOLID PARTICLES AND CATALYSTS**

(30) Priority: 08.06.2017 BG 112519
(71) Applicant: Lyuben, Stanev Lalev, 5770 Lukovit (BG); Saani, Ismetov Denkchiev, 4006 Plovdiv (BG)
(72) Inventor: Lyuben, Stanev Lalev, 5770 Lukovit (BG)
(74) Representative: Benatov, Samuil Gabriel

(57) **Abstract**

The invention relates to a device and method for cleaning solid particle filters (DPF/FAB) for devices with diesel engines and for catalytic converters for devices with petrol or gas-powered engines.

The cleaning device includes a cleaning chamber with a cleaning head with a nozzle for cleaning and a means for gripping and fixing the filter or catalytic converter, a sedimentation reservoir (19) for the cleaning fluid, a pressure pump (8) for feeding the cleaning fluid to the cleaning head, a heating means (12) for the cleaning fluid and a conduit for feeding air under pressure (14) to the cleaning head.

The method includes several stages of washing the cleaned object in two directions with heated cleaning fluid under pressure, rinsing, controlling the degree of cleaning, repeating the washing and drying stages if necessary. In the washing stages, for greater effectiveness, in short periods of time air under pressure is also fed to the fluid.

## Description

### TECHNICAL FIELD OF THE INVENTION

The invention relates to a device and method for cleaning solid particle filters (DPF / FAB) for devices with diesel engines and for catalytic converters for devices with petrol or gas-powered engines.

### PRIOR ART

The purpose of the solid particulate filters (DPF, FAP) is to remove soot from the exhaust gases before they are discharged into the atmosphere. The main part of such filters is a ceramic block of porous carbide material, with multiple micro-channels. When the exhaust gases pass through the filter, the soot is retained in the micro-channels, which over time leads to clogging and the need to regenerate the filter.

The purpose of the catalytic converter (catalyst) is to convert the harmful components of the exhaust gases (such as carbon oxide, hydrocarbon, nitrogen oxide, etc.) from the operation of internal-combustion engines into harmless gases (water vapor, carbon dioxide and nitrogen). The catalytic converter gradually becomes clogged with sediments during operation and has to be cleaned.

Various methods are known for cleaning (regenerating) solid particulate filters and catalytic converters:
1. By liquid sprays which are injected into the openings of the filters during engine operation. After injection and cleaning the spray is emitted from the exhaust pipe directly into the atmosphere. In this case the released solid particles re-enter the atmosphere. This method does not require disassembling and flushing the filter, but its efficiency is small and results in additional pollution of the atmosphere.
2. By hydrogen which is injected into the filter during engine operation and does not require disassembly of the filter. The source of the hydrogen is a separate machine, and the procedure lasts about 30-40 minutes. This method also relies on the hot exhaust gases coming out from the operating engine. The efficiency of this method is also small and quickly requires subsequent cleaning of the filter.
3. By ultrasound in an aquatic environment. In this method, the filter is removed and placed in a cleaning device. The filter is filled with water and is processed with ultrasound for 14 seconds, and then a "water jet" is applied at a pressure of 2.5 bars to break down the sedimentation. In this method there is a risk of breaking the internal structure of the filter and breaking the ceramic.
4. By chemical agents - concentrated solutions with corrosive action, which remove the soot and deposition accumulated in the filter. Since these solvents are usually highly corrosive to the different metals and/or ceramics from which the filter is made, after the cleaning it is necessary to add neutralizers. In this method, the filter is removed, cleaned and reassembled after the cleaning. A disadvantage of these methods is the risk of damaging the parts of the filter from the corrosive solutions.

There is a need to provide a new effective cleaning method, which at the same time does not damage the filter and is not dangerous to the users and the environment.

### SUMMARY OF THE INVENTION

The aim of the invention is to provide an efficient and economical method for cleaning solid particle filters for devices with diesel engines and for catalytic converters for devices with petrol or gas-powered engines by using a water-based cleaning fluid.

An additional aim of the cleaning method is to be at the same time gentle on the cleaned filters and catalytic converters without causing mechanical or chemical damage to the parts of the cleaned object.

Another goal of the cleaning method is to be safe for the operators carrying out the cleaning and to be environmentally friendly.

Moreover the cleaning method aims to provide an effective visual control of the cleaning process and for sending and storing the cleaning process data.

Furthermore, a goal for the invention is to provide a device for cleaning solid particle filters for devices with diesel engines and for catalytic converters for devices with petrol or gas-powered engines that is compact, efficient, easy to use and economical.

An additional goal for the invention is to provide a mobile device for the clients.

These and other tasks are achieved by creating a device for cleaning solid particle filters for devices with diesel engines and for catalytic converters for devices with petrol or gas-powered engines including:
- Cleaning chamber with top and side walls and bottom wall with grid;
- A cleaning head mounted to be movable in the upper part of the chamber; the cleaning head includes means for gripping and fixing the filter or the catalytic converter, a central channel body with inlet openings for the cleaning fluid and the compressed air, and a cleaning nozzle adapted to be inserted through an opening of the cleaned filter or catalytic converter;
- Means for raising and lowering the cleaning head;
- A cleansing fluid sedimentation reservoir located below the grid of the bottom wall of the cleaning chamber, with means for charging the cleaning fluid and a drainage channel for draining the spent cleaning fluid; the cleansing fluid sedimentation reservoir is adapted to precipitate solid waste from the cleaning;
- A pressure pump adapted to deliver a fluid with a temperature of up to about 90 ° C, wherein the pressure pump is connected on one side through an inlet tube with the cleansing fluid sedimentation reservoir for suction of the cleaning fluid and, on the other side, the pressure pump is connected by a pressure hose with the body of the cleaning head for supplying a cleaning fluid under pressure to the nozzle of the cleaning head;
- A means for heating the cleaning fluid from about 40°C to about 90°C placed before the pressure pump in the direction of the flow of the cleaning fluid;
- A conduit pipe for air under pressure as at the one end of the air conduit is a means for connecting to a pressurized air source with a valve and the other end of the air conduit is connected to the inlet of the cleaning head for supplying compressed air to the nozzle.

In a preferred version, the cleaning device includes a programmable control module for controlling the operation of the device connected to the possibility of setting commands to the pressure pump and the means for heating the cleaning fluid to control the pressure and temperature of the cleaning fluid.

In one version, the means for lifting and lowering the cleaning head includes a rope connected at one end to an electric winch and, at its other end, the rope is connected to a connecting mechanism fixed to the upper part of the cleaning head, wherein the rope is hung on a support mechanism mounted on the upper wall of the cleaning chamber, as the electrical winch is connected with the possibility of receiving commands from the control module.

In a preferred version of implementation, the means for fixation of the filter or catalytic converter to be cleaned to the cleaning head includes a double-acting pneumatic cylinder connected by conduit to a pressurized air source including a piston with a piston rod extending downwardly out of the pneumatic cylinder and mounted therein with the possibility for reciprocating motion, the piston rod being connected to the upper part of the cleaning head body in its bottom part. An extended tubular rubber sleeve extends around the pipe of the cleaning nozzle, which in its lower part is fixed to the pipe with the cleaning nozzle; the rest of the rubber sleeve covers freely the pipe of the cleaning nozzle, wherein the means for fixing also includes a support plate. It is located beneath the body of the cleaning head, which is fixed to the pneumatic cylinder by at least one rigid connecting element. The support plate has an opening aligned with the opening of the pneumatic cylinder, through which the nozzle pipe is mounted with the possibility of reciprocating movement. The upper end of the rubber sleeve has a diameter that is larger than the diameter of the opening of the support plate and lean against it.

It is desirable that the cleaning device for solid particulate filter to have a means for fixing the lower part of the cleaned filter to the grid. Additionally, there may also be adapters to the fixation means for attaching solid particle filters with different sizes and shapes.

In a preferred version, the chamber has a fan mounted at the top of the chamber connected with the possibility of receiving commands from the control module.

Furthermore, it is also possible to have a level sensor for reading the level of filling of the sedimentation reservoir with a cleaning fluid, which level sensor is connected for transmitting data to the control module.

In a preferred version of the cleaning device, the means for heating the cleaning fluid is located directly in the sedimentation reservoir, and a temperature sensor for controlling the temperature of the cleaning fluid is provided in the sedimentation reservoir, connected to transmit the data to the control module.

It is preferred that the cleaning device to also include an endoscopic camera for examining the cleaned filter or catalytic converter connected to transmit data to the control module.

It is also possible for the cleaning device to be mounted on a mobile freely shifting platform.

Another task of the invention is to provide a method for cleaning solid particle filters for devices with diesel engines and for catalytic converters for devices with petrol or gas-powered engines. It is achieved by creating such a cleaning method by cleaning device comprising a pneumatic cleaning head for supplying a heated liquid cleaning fluid under pressure through the openings of the particulate filter or the catalytic converter. Said method includes the following stages:
- Determining the type, size and degree of foulness of the solid particulate filter or catalytic converter;
- Fixing the one end of the solid particulate filter or catalytic converter to the cleaning head of the cleaning device;
- Setting the cleaning device a cleaning fluid temperature of about 40°C to about 90°C, preferably 60°C to 80°C;
- Washing for 10-20 minutes, preferably 15 minutes, by feeding a heated to the set temperature cleaning fluid under pressure of about 1.25 bar to about 2.5 bar through the nozzle of the cleaning head into the opening of the one end of the filter for solid particles or the catalytic converter;
- Reversing the direction of washing by rotating the solid particulate filter or catalytic converter and attaching the other end to the cleaning head and washing with a cleaning fluid under pressure at the said set temperature for 10-20 minutes, preferably 15 minutes;
- Controlling the contamination of the outgoing cleaning fluid at the outlet of the cleaned solid particle filter or catalytic converter and repeating the said washing stages to obtain a clear outgoing cleaning fluid;
- Rinsing for 15-20 minutes by supplying clean water at ambient temperature through the nozzle of the cleaning head;
- Visual inspection of the degree of cleaning and repetition of the aforementioned cleaning stages if necessary;
- Drying the rinsed filter for 10-15 minutes by feeding air through the nozzle of the cleaning head.

Preferably, the cleaning fluid comprises of water and a carboxylic acid or a salt.

In one version of implementation of the method, the cleaning fluid is an aqueous solution of citric acid in a proportion of 100g to 200g, preferably 150g citric acid per 10 liters of water.

In another version of implementation of the method, the cleaning fluid is an aqueous solution of citric acid and phosphoric acid in a proportion of 80g to 160g, preferably 120g citric acid and 20g to 40g, preferably 30 g phosphoric acid per 10 liters of water.

Preferably, the determination of the temperature and pressure of the cleaning fluid is based on the foulness of the cleaned object, and in the case of highly contaminated filters, a temperature of 70°C to 80°C and a pressure of about 2.5 bar is selected, and in the case of slightly and moderately soiled filters, a temperature of 60°C to 65°C and a pressure of 1.25 bar is selected.

It is preferable for the cleaning to last for not less than 1 hour and to include four washing stages of 15 minutes alternating the washing stage on one side of the filter or the catalytic converter and the washing stage on the other side of the filter or catalytic converter.

It is possible in washing stage at 15 to 30 seconds intervals to the cleaning fluid into the cleaning head for 1 to 3 seconds is fed air under pressure of about 5 to 8 bar.

In a preferred version the verification of the foulness and the degree of cleaning of the filter or catalytic converter is provided by an endoscopic camera.

The trails of the method and device according to the invention have shown excellent results from cleaning of filters and catalytic converters. The cleaning rate reaches 95-98% and the cleaned filters and catalytic converters have an intact internal structure and can be reused for extended vehicle use or continuous operation of the devices in which cleaned filters or catalytic converters are installed.

The method and the device allow the cleaning of filters and catalytic converters with various types, shapes, sizes and degree of foulness, providing an adequate and suitable combination of different cleaning modes for the specific need. Cleaning is cost-effective.

In addition, the device is easy to handle and control, compact and mobile.

### BRIEF DESCRIPTION OF THE DRAWINGS

The characteristics of the invention will be disclosed in details in the following description of preferred embodiments of the device and the cleaning method, given as non-restrictive examples, with reference to the attached drawings where:
Figure 1 is a schematic view of a preferred version of the cleaning device according to the invention with a solid particle filter attached to the cleaning head.
Figures 2a and 2b represent a detailed schematic view of the cleaning head with a principle of joining action in different joining phases, with arrows showing the direction of movement of the air and the piston in the pneumatic cylinder.

### DETAILED DESCRIPTION OF PREFERRED EMBODIMENTS

As used in the present description and claims, the words "upper", "lower", "top", "bottom" "front", "back" are not restrictive and reflect the usual position of the components of the cleaning device.

Where the term "filter" is used in the description or claims, is meant a "solid particulate filter".

By "cleaned object" in the description is meant a solid particulate filter for devices with diesel engines or a catalytic converter for devices with petrol or gas-powered engines.

According to the invention, the method for cleaning solid particulate filters for devices with diesel engines and for catalytic converters for devices with petrol or gas-powered engines is accomplished by a cleaning device comprising a pneumatic cleaning head for supplying a heated liquid cleaning fluid under pressure through the openings of a solid particulate filter or a catalytic converter.

The method includes the following stages:
- Determining the type, size and degree of foulness of the solid particulate filter or catalytic converter;
- Fixing the one end of the solid particulate filter or catalytic converter to the cleaning head of the cleaning device;
- Setting the cleaning device a cleaning fluid temperature of about 40°C to about 90°C, preferably 60°C to 80°C;
- Washing for 10-20 minutes, preferably 15 minutes, by feeding a heated to the set temperature cleaning fluid under pressure of about 1.25 bar to about 2.5 bar through the nozzle of the cleaning head into the opening of the one end of the filter for solid particles or the catalytic converter;
- Reversing the direction of washing by rotating the solid particulate filter or catalytic converter and attaching the other end to the cleaning head and washing with a cleaning fluid under pressure at the said set temperature for 10-20 minutes, preferably 15 minutes;
- Controlling the contamination of the outgoing cleaning fluid at the outlet of the cleaned solid particle filter or catalytic converter and repeating the said washing stages to obtain a clear outgoing cleaning fluid;
- Rinsing for 15-20 minutes by supplying clean water at ambient temperature through the nozzle of the cleaning head;
- Visual inspection of the degree of cleaning and repetition of the aforementioned cleaning stages if necessary;
- Drying the rinsed filter for 10-15 minutes by feeding air through the cleaning head nozzle.

The cleaning liquid fluid may be only water or aqueous detergent solution.

In one version, the cleaning detergent is based on a carboxylic acid or a carboxylate. Preferred are harmless to nature and people easily water-soluble carboxylic acids with proven cleaning effect.

In one preferred version of implementation, the cleaning fluid is an aqueous solution of citric acid in a proportion between 100g to 200g citric acid per 10 liters of water, preferably 150g citric acid per 10 liters of water. This version of the cleaning fluid is suitable for the cleaning of lightly soiled filters or catalytic converters.

For example, for one cleaning a cleaning fluid consisting of 35 liters of water and 500g of citric acid can be used.

In another preferred version, the cleaning fluid is an aqueous solution of citric acid and phosphoric acid with a composition of 80g to 160g citric acid and 20g to 40g phosphoric acid per 10 liters of water so that the citric acid: phosphoric acid is preferably 4: 1.

Preferably, the composition of the cleaning fluid is 120g of citric acid, 30g of phosphoric acid and 10 liters of water. This version of the cleaning fluid is suitable for cleaning highly contaminated filters or catalytic converters.

For example, for one cleaning a cleaning fluid consisting of 30 liters of water, 400g of citric acid and 100 g of phosphoric acid can be used.

In another version, the cleaning detergent is sodium bicarbonate, wherein the cleaning fluid composition is 200g to 260g, preferably 230g sodium bicarbonate per 10 liters of water.

For environmental protection, it is preferred that all washing stages are carried out with the same cleaning fluid (solution) that circulates continuously in the cleaning device.

The temperature and pressure of the cleaning fluid is determined by the degree of foulness of the cleaned object. The degree of foulness is determined by computer diagnostics and by visual inspection with an endoscopic camera. Filters or catalytic converters with clogging up to 70% are defined as moderately soiled. Filters or catalytic converters with clogging above 70% are considered to be highly dirty, and clogging over 95% is defined as critically contaminated.

The initial pressure of the cleaning fluid is selected according to the degree of contamination of the cleaned object, with a lower initial pressure being selected for more polluted filters. In the first washing stage, it is advisable to start at a lower pressure, for example 1.25 bar, and gradually, with the increasing of the permeability of the filter, the pressure to increase. The lower initial pressure spares the internal structure of the filters and catalytic converters and protects the porous structure from disruption.

After initial washing with a lower pressure, highly contaminated objects are preferably washed with a cleaning fluid with a pressure of about 2.5 bar.

The pressure of the cleaning fluid at moderately and slightly soiled objects or already partially cleaned objects is preferably about 1.25 bar.

The pressure also depends on the size of the cleaned object, for example, filters for cars with engines up to 2,000 cubic centimeters, preferably are washed with a cleaning fluid with an average pressure of about 1.25 bar, and filters for cars with engines over 2,000 cubic centimeters of engine are preferably washed with a cleaning fluid with an average pressure of about 2.5 bar.

For highly contaminated filters or catalytic converters, the cleaning fluid is heated from 70°C to 80°C. For critically contaminated objects, the cleaning fluid at the beginning may be at a temperature up to 90°C, after which the temperature is lowered to about 80 ° C. The operation with temperatures above 80°C leads to the formation of a large amount of steam, and hence the loss of cleaning fluid and higher temperatures also create a higher risk of burning the operator of the device. As the cleaning progresses advance, the temperature and pressure of the cleaning fluid have to be reduced.

In medium and slightly soiled filters or catalytic converters, the cleaning starts at 80°C, then (from 5 to 10 minutes) the temperature of the cleaning fluid decreases to 60-65°C, which temperature range is the most optimal for performing the stages of the washing.

In a version of the method, the contamination control of the outgoing cleaning fluid at the outlet of the cleaned object is performed visually. This allows quick and cost-effective control.

In a preferred version of the method, the cleaning process lasts no less than one hour and includes four washing stages of 15 minutes, alternating washing on one side of the filter or catalytic converter with washing on the other side of the filter or the catalytic converter. After finishing the four washing stages, the cleaned object is rinsed with clean water and the degree of cleaning is checked, preferably with an endoscopic camera. If it is determined that the filter or the catalytic converter is not sufficiently cleaned, at least two further washing stages are applied - one on each side of the cleaned object. The new washing stages are performed with new cleaning fluid. Again, the cleaned object is rinsed and the degree of cleaning is checked. The described procedure is repeated until the cleaned object is completely cleaned.

To increase the cleaning efficiency, the cleaning head is supplied with pressurized air from about 5 bar to about 8 bar. The most optimal air pressure is 8 bar, which has the best cleaning effect without the risk of damaging the elements of the filter or catalytic converter. Pressurized air is supplied at intervals of 15-30 seconds for 1 to 3 seconds, preferably 2 seconds.

For critically contaminated filters or catalytic converters with severely degraded permeation, initially with the cleaning fluid at a lower pressure is supplied a small amount of air with a pressure of 0.2 to 0.5 bar. This is done until the fluid comes out from the opposite side of the filter or catalytic converter. Next, the basic stages of washing are proceeded.

Checking with endoscopic camera allows efficient monitoring of the degree of cleanliness, with camera images being displayed on the device display or wirelessly transmitted in real time to a display on another device, such as a phone, tablet, or computer, of the owner of the cleaned object. The recorded images from the endoscopic camera of the state of the cleaning object before, during and after the cleaning process can be stored as records of cleanup.

The above-described method can be implemented by device for cleaning solid particle filters for diesel engines and for catalytic converters for petrol or gas-powered engines according to the invention.

In the exemplary implementation, shown in the Figures, a cleaning device includes body 2 in whose upper part a cleaning chamber 1 is formed with upper and side walls, which are preferably dense, the front wall being an opening door. It is an advantage, if a part of the door and at least part of the other side walls of the chamber are made of a transparent material, for example acrylic glass, polycarbonate or other suitable material. The bottom wall (floor) of the cleaning chamber has a grate, for example, made of metal, which permits the free passing and flowing of the spent cleaning fluid with the solid particles contained within.

In the upper part of the cleaning chamber 1, a cleaning head is movable mounted which includes a means for gripping and fixing the filter 22, a body 25 with central channel with inlet openings 31 and 32 for cleaning fluid and compressed air and a cleaning nozzle 18, adapted to be inserted through an opening of the cleaned filter 22 or catalytic converter. In the simplest case, the nozzle 18 is a pipe extending from the underside of the cleaning head.

The cleaning head with the nozzle 18 preferably are made of stainless steel.

Under the grid in the bottom wall of the cleaning chamber 1 is situated an open on the top sedimentation reservoir 19 which has a means for loading the cleaning fluid and a drainage channel for draining the spent cleaning fluid. The sedimentation reservoir 19 is adapted to precipitate the solid waste from the cleaning, which by gravity is deposited at the bottom of the sediment reservoir 19. The capacity of the sedimentation reservoir 19 is from 20 to 80 liters, preferably from 30 to 40 liters.

In the illustrated version shown in the Figures, a pressure pump 8 is mounted in the lower part of the body 2, adapted to supply a fluid with a temperature of up to about 90°C. The pressure pump 8 is connected, on the one side through an inlet pipe 23 to the sedimentation reservoir 19 for the suction of the cleaning fluid, the inlet pipe 23 being connected with the sedimentation reservoir 19 below the working level of the cleaning fluid so as to suck a clear cleaning fluid. On the other side the pressure pump 8 is connected by a hose 6 to the cleaning head inlet 31 for supplying a cleaning fluid under pressure to the nozzle 18 of the cleaning head. The pressure pump 8 is adapted to deliver fluid to the pressurized system up to about 2.5 bar. After the pressure pump 8, a valve can be mounted to control the pressure of the cleaning fluid supplied to the cleaning head.

Prior to the pressure pump 8 in the direction of the flow of the cleaning fluid there is a means for heating the cleaning fluid 12 from about 40°C to about 90°C. In the illustrated version shown in the Figures, the means for heating 12 is a heater located in the sedimentation reservoir 19 where a temperature sensor 21 is provided to control the temperature of the cleaning fluid. It is also possible for the heater to be a flow-through device located in the path of the cleaning fluid between the sedimentation reservoir 19 and the pressure pump 8.

The cleaning device also has a pressurized air system including an air conduit 14 which at one end has a means for connecting to a source of pressurized air with a valve (not shown). The source of pressurized air may be external or mounted in the body 2 of the device, and may be an air compressor, pressurized gas bottle or any other suitable source of compressed air. The other end of the air conduit 14 is connected to the air inlet 32 of the cleaning head for supplying pressurized air to the nozzle. Preferably, said valve is an electromagnetic valve with a timer-circuit which can be set in certain seconds to deliver pressurized air.

The device may also have an electrical panel 11 for distribution and powering the elements of the device with electricity.

In the version illustrated in the Figures, the air conduits 14 are shown interwoven around the cleaning fluid hose which optimizes the working space in the cleaning chamber 1 and facilitates the handling of the cleaning head.

In the preferred version of implementation shown in the Figures, the cleaning device has a programmable control module 3 for controlling the operation mode of the device connected to the possibility of making commands: to the pressure pump 8 for adjusting its operating mode; to the heating means 12 of the cleaning fluid for controlling the temperature of the cleaning fluid; to the electromagnetic valve for controlling the mode of supply of pressurized air to the cleaning head and to other mechanisms of the device. For this purpose, the control module 3 is also connected to the temperature sensor 21 to control the temperature of the cleaning fluid. The control module 3 may include a timer, indicators for temperature, time, pressure, and other device characteristics. The control module 3 may also include a data processing processor, electronic memory, data input means, and an interactive display.

The air can be fed into the system automatically by a pre-programmed timer-circuit in the control module 3, to which the frequency and duration of the air supply is set. Preferably, manual air supply to the system can also be provided by a special button in the control module 3 when it is necessary to supply only air through the cleaning nozzle 18, for example in the drying step.

The cleaning device also has a means for raising and lowering the cleaning head. In the version shown in the Figures, this means includes a rope 13 connected at one end to an electric winch 9 mounted in the lower part of the body 2. At its other end, the rope 13 is connected with a connecting mechanism 17 attached to the top of the cleaning head, for example a metal fastening plate with a tab. In this version the rope 13 passes through a leading pipe passing on the back of the cleaning chamber and the rope 13 is hung to a support mechanism (in the case of, for example, a rotating roller) mounted on the upper wall of the cleaning chamber 1. The electric winch 9 is connected with the possibility of receiving commands from the control module 3. By means of raising and lowering the cleaning head can be conveniently positioned when attaching different sized cleaning objects or during the cleaning process to provide a suitable angle of the cleaned object.

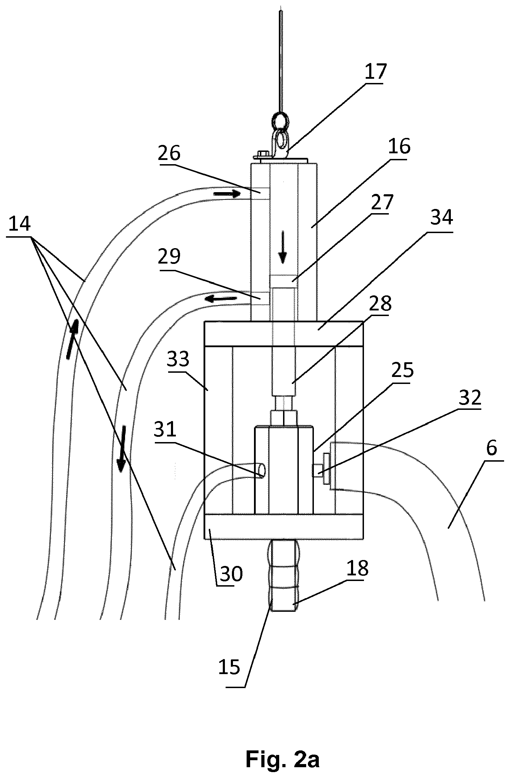

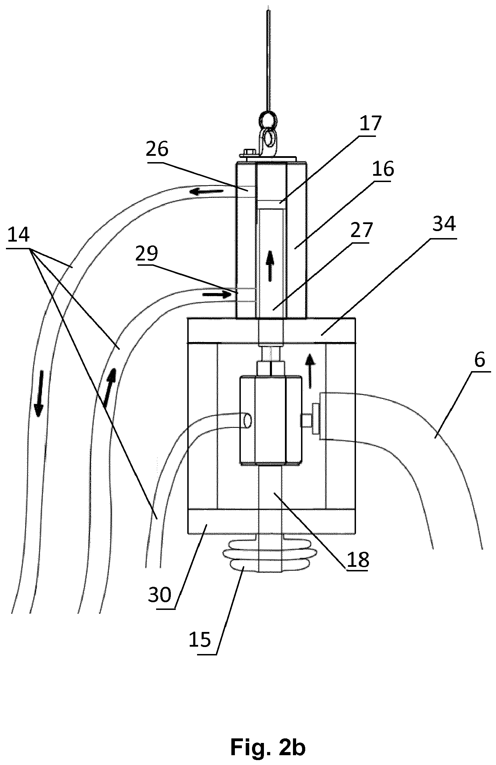

In a preferred version of implementation illustrated in Figures 2a and 2b, the means for fixing the cleaning object to the cleaning head is set up into motion by pneumatics and includes a double-acting pneumatic cylinder 16 connected to a source of pressurized air through two openings, upper 26 and lower 29, including a piston 27 with a piston rod 28 mounted in the cylinder 16 with a possibility for reciprocating motion. When feeding air through the upper opening 26 of the pneumatic cylinder 16, the piston 27 pushes the piston rod 28 outwardly, and when feeding air through the lower opening 29 of the pneumatic cylinder 16, the piston 27 pulls the piston rod 28 inwardly into the cylinder 16. The piston rod 28 extends downwardly outside the pneumatic cylinder 16, and at its lower end the piston rod 28 is connected coaxial with the upper part of the cleaning head. Around the pipe of the cleaning nozzle 18 is located extend tubular rubber sleeve 15 which in its lower part is immovably fixed around the pipe of the cleaning nozzle 18, and the remainder of the rubber sleeve 15 enfolds freely the pipe of the cleaning nozzle 18. The rubber sleeve 15 serves both to seal the gap between the nozzle pipe and the inlet pipe 23 of the cleaned object and to attach the cleaned object to the cleaning head. For this purpose, the fixing means also includes a support plate 30 positioned under the body of the cleaning head, which support plate 30 is immovable connected to the pneumatic cylinder 16 by at least one rigid connecting element 33. In the version shown in the Figures, the support plate 30 is given as a disk rigidly connected by two solid columns-handles 33 with an identical shaped and sized disk 34 attached to the bottom side of the pneumatic cylinder 16. The columns-handles also serve to conveniently holding and manipulating the pneumatic head by the operator of the device. Both of these disks 30 and

34 have a central openings aligned with the opening of the pneumatic cylinder 16. Through the opening of the upper disk 34 the piston rod 28 passes freely and through the opening of the lower disk 30, which is acting as the support plate 30, the pipe with the nozzle passes freely with the possibility of reciprocating movement. The upper end of the rubber sleeve 15 is with a diameter that is larger than the diameter of the opening of the bottom disk 30, whereupon the upper end of the rubber sleeve 15 abuts against the lower disk 30 without being able to pass through its opening. In this construction, when the piston rod 28 is pulled inwards into the pneumatic cylinder 16 and, together with the conditional upward movement of the cleaning head (Figure 2b) and the pipe with the nozzle connected to it, the rubber sleeve 15 propped with its free upper end in the lower disk 30, shrinks in height and, accordingly, inflates aside. And the other way about, when the piston rod 28 is pushed out of the pneumatic cylinder 16, together with the conditional downward movement of the cleaning head and the nozzle pipe connected to it (Figure 2a), the rubber sleeve 15 stretches in height and shrinks aside. The attachment of the cleaning object to the cleaning head is achieved by inserting the pipe with the nozzle with the rubber sleeve 15 in a taut position (the piston rod is maximally protruding from the pneumatic cylinder 16) into one of the openings of the cleaned object, then the pneumatic cylinder 16 is set into motion so as to pulls the piston rod 28 inwardly, whereby the rubber sleeve 15 inflates aside, filling the gap and gripping the object to be cleaned. The release of the cleaned object happen in the opposite way by setting into motion the pneumatic cylinder 16 so as to push out the piston rod 28, which leads to the straightening of the rubber sleeve 15.

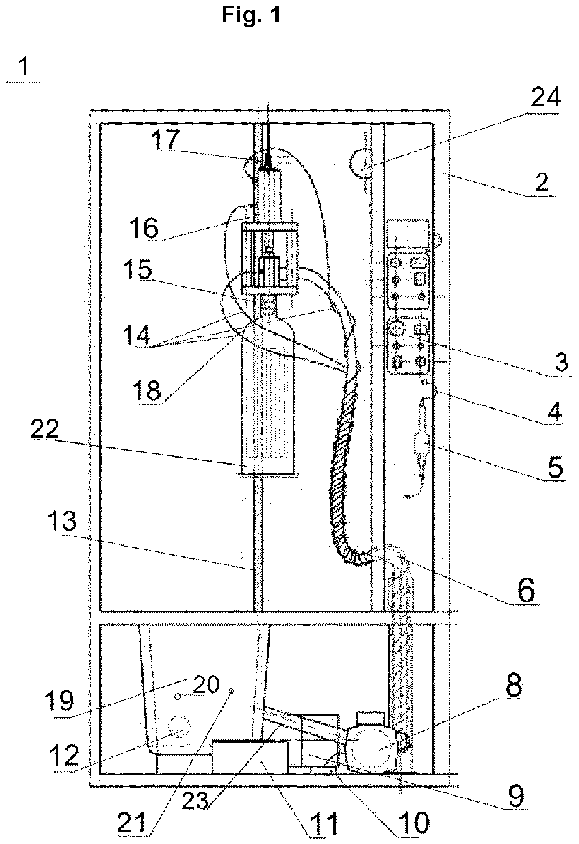

The pneumatic cylinder 16 is connected by two gas pipes with a source of pressurized air, preferably the same source as for the air supplied to the cleaning head. Setting into motion of the pneumatic cylinder 16 is performed by a second gas valve (not shown in the Figures), preferably electromagnetic, which is controlled by the control module 3 or alternatively by a separate setting mechanism such as a foot pedal 10 as shown in Figure 1.

Of course, the means for fixing the cleaned object can be implement in other ways, for example, by hooks, straps, magnets or by other known per se means.

For the attachment of different size and shape filters and catalytic converters, are provided adapters for the fixing means to fill the gaps larger than the size of the rubber sleeve 15. The adapters may be additional rubber sleeves or metal plates with openings for connecting elements.

To ensure the stability of the cleaned object during the cleaning process, it is also preferable to provide means for attaching the other end of the cleaned object to the bottom of the chamber, in particular to the grid (not shown in the Figures). This can be done, for example, with straps or hooks.

For ventilation of the cleaning chamber, ventilation openings are provided in the upper wall and/or at the top end of at least one of the side walls of the chamber. Also preferably is provided a fan 24 mounted in the upper part of the chamber which can be set into motion and controlled by the control module 3.

To monitor the cleaning process in the cleaning chamber, lighting can be provided by suitable waterproof lighting fixtures.

For the safety of the system in the sedimentation reservoir 19, is provided a level sensor 20 for reading the level of filling of the sedimentation reservoir 19 with a cleaning fluid, which level sensor 20 is connected to the control module 3. The control module 3 set into motion a pressure pump 8 upon reaching the required level of cleaning fluid in the sedimentation reservoir 19. At the same time, when the level drops, the level sensor 20 transmits a signal to the control module 3 which stops the operation of the device.

For checking the foulness and the degree of cleaning of the filter or catalytic converter, the device may be equiped, for example, with an endoscopic camera 5, which allows the cleaned objects to be inspected from the inside, the endoscopic camera 5 being connected, for example, by a cable 4, to transmit data to the control module 3, on whose display the image of the endoscopic camera 5 is displayed. Moreover, the control module 3 may be adapted to transmit images in real time (wired or wireless, via the Internet or via mobile networks) from the endoscopic camera 5 to other devices, such as a telephone, tablet, or computer, of the owner of the cleaned object. The control module 3 may store information about the cleaning process, including the images from the endoscopic camera 5 obtained before, during and after the completion of the cleaning process.

It is preferable the cleaning device to be mobile. This can be done by installing wheels on the underside of the body 2 of the device or by mounting the device on a mobile freely shifting platform. This allows easy transportation of the cleaning device to the required location.

A method of work of the exemplary version of the cleaning device shown in the Figures:
Initially the sedimentation reservoir 19 is filled to the required level with water, where the level sensor 20 sends a signal to the control module. The required temperature is then set and the control module 3 switch on the heater 12 and monitor the rise of the water temperature by the temperature sensor 21. Reaching the required temperature is indicated and/or visualized by the control module 3 where the machine is ready for operation. A corresponding amount of detergent is also added to the water in the sedimentation reservoir. The desired pressure of the cleaning fluid is adjusted. The winch 9 is then set into motion and the cleaning head is lowered down to the cleaned object, for example a solid particulate filter 22, and the pipe of the cleaning nozzle 18 is inserted through one of the filter openings, then the pneumatic means is set into motion for securing the filter to the cleaning head. The winch 9 is again set into motion and sets up the filter in a vertical position, where the lower part of the filter is fixed by straps to the grate of the cleaning chamber. The timer of the control module 3 is set for the required time and the washing stage starts, while the control module triggers the pressure pump. Through the hose 6, the heated cleaning solution under pressure is fed through the nozzle 18 into the interior of the filter 22. The water comes out from the opposite opening of the cleaned filter and flows through the grid back into the sedimentation tank 19 where the solid waste from the cleaning is precipitated to the bottom, and in the upper part of the sedimentation tank 19, the refined from solid particles cleaning solution is again sucked through the inlet pipe 23 from the pressure pump 8. If the level of the cleaning solution in the sedimentation tank 19 drops below a certain level, the level sensor 20 transmits a signal to the control module which switch off the pressure pump 8. In the washing stage, the control module 3 can be programmed to feed air under pressure at intervals of 15-30 seconds to the cleaning head by giving appropriate commands to the electromagnetic valve of the air conduit 14.

After completion of the washing stage the filter 22 is released and in the aforesaid way is attached with the other opening to the cleaning head. A new washing stage follows with the same cleaning solution. After several washing stages (typically 4) the degree of cleaning of the filter is checked by the endoscopic camera 5 and, if necessary, the cleaning stages are repeated. After completion of the washing stage, the used cleaning solution is drained from the sedimentation reservoir 19 and the sludge from the solid waste is also removed from the bottom, then the sedimentation reservoir 19 is washed and filled with clean water to the required level. In the rinsing stage, by the control module 3 the pressure pump 8 is again set into motion without heating the water which is fed through the nozzle 18 into the cleaned filter in the direction of the usual path of the exhaust gases. The timer of the control module 3 is set for 15 to 20 minutes of rinse program. Then, by the control module 3 the drying stage is set into motion, as through the electromagnetic valve and the air conduit 14 to the nozzle 18 of the cleaning head is fed only air for 10-15 minutes.

The reference signs for technical features are included in the claims for the sole purpose of increasing the intelligibility of the claims and accordingly, such reference signs do not have any limiting effect on the interpretation of each element identified by way of example by such reference signs.

## Claims

1. A device for cleaning solid particle filters for diesel engines and for catalytic converters for petrol or gas-powered engines comprising:
- a cleaning chamber (1) with upper and side walls and a bottom wall with a grid;
- a cleaning head mounted movable in the upper part of the chamber, the cleaning head including means for gripping and fixing the filter or catalytic converter, a central channel body (25) with inlets (31 and 32) for cleaning fluid and air under pressure, and a cleaning nozzle (18) adapted to be inserted through an opening of the filter or catalytic converter to be cleaned;
- a means for raising and lowering the cleaning head;
- a sedimentation reservoir (19) located under the grid of the bottom wall of the cleaning chamber, with means for loading the cleaning fluid and a drainage channel for draining the used cleaning fluid, wherein the sedimentation reservoir (19) is adapted to precipitate the solid wastes from the cleaning;
- a pressure pump (8) adapted to feed a fluid with a temperature of up to 90°C, wherein the pressure pump (8) is connected on one side by an inlet pipe (23) to the sedimentation tank (19) for sucking the cleaning fluid, and on the other side the pressure pump (8) is connected by a pressure hose (6) to the body of the cleaning head (25) for feeding the cleaning fluid to the nozzle of the cleaning head (18);
- a means for heating (12) the cleaning fluid from about 40°C to about 90°C located upstream to the pressure pump (8) in the direction of the flow of the cleaning fluid;
- a conduit for air under pressure (14), on one end of the air conduit there is a means for connection to a source of compressed air and a valve, and other end of the air conduit is connected to the inlet (31) of the cleaning head for feeding air under pressure to the nozzle (18).

2. The cleaning device according to Claim 1, **characterized in that** it further comprises a programmable control module (3) for controlling the operation mode of the device connected with the ability to give commands to the pressure pump (8) and the heating means (12) for the cleaning fluid for controlling the pressure and temperature of the cleaning fluid.

3. The cleaning device according to Claim 2, **characterized in that** the lifting and lowering means include a rope (13) connected at one end to an electric winch (9) and at the other end the rope (13) is connected to a connecting mechanism (17) fixed to the upper part of the cleaning head, wherein the rope is hung on a support mechanism mounted on the upper wall of the cleaning chamber, the electric winch being connected with the ability of receiving commands with the control module (3).

4. The cleaning device according to any of the preceding Claims, **characterized in that** the means for fixing the filter or catalytic converter to be cleaned to the cleaning head includes a double-acting pneumatic cylinder (16) connected by conduits (14) to a source of air under pressure, the pneumatic cylinder including a piston (27) with a piston rod (28) extending downwardly outside the pneumatic cylinder (16) and mounted therein with an ability for reciprocating motion, wherein at its lower end the piston rod (28) is connected coaxial with the upper part of the body (25) of the cleaning head, and around a pipe of the cleaning nozzle (18) an extended tubular rubber sleeve (15) is located which in its lower part is fixed to the pipe of the cleaning nozzle (18), and the rest of the rubber sleeve (15) freely covers the pipe of the cleaning nozzle (18), wherein the fixing means also includes a support plate (30) located below the body of the cleaning head (25) that is fixed immovable to the pneumatic cylinder (16) by at least one rigid connecting element (33), and the support plate (30) has an opening coaxial with the opening of the pneumatic cylinder (16), and in said opening of the support plate (30) the pipe of the nozzle (18) is mounted with the possibility of reciprocating movement, wherein the upper end of the rubber sleeve (15) has a larger diameter than the diameter of the opening of the support plate (30) and abuts against it.

5. The cleaning device according to any of the preceding Claims, **characterized in that** there are adapters to the fixing means for attaching solid particle filters with different sizes and shapes.

6. The cleaning device according to any of Claims from 2 to 5, **characterized in that** the chamber has a fan (24) mounted in the upper part of the chamber, connected to the ability of receiving commands with the control module (3).

7. The cleaning device according to any of Claims from 2 to 6, **characterized in that** in the sedimentation reservoir (19) is located a level sensor (20) for reading the filling level of the sedimentation reservoir (19) with cleaning fluid, which level sensor (20) is connected for transmitting data to the control module (3).

8. The cleaning device according to any of Claims from 2 to 7, **characterized in that** the heating means (12) for the cleaning fluid is located directly in the sedimentation tank (19), wherein a temperature sensor (21) is provided in the sedimentation reservoir (19) for controlling the temperature of the cleaning fluid connected for data transmission to the control module (3).

9. The cleaning device according to any of Claims from 2 to 8, **characterized in that** it also comprises an endoscopic camera (5) for examining the cleaned filter or catalytic converter, which endoscopic camera (5) is connected to transmit data to the control module (3).

10. A method for cleaning solid particle filters for devices with diesel engines and for catalytic converters for devices with petrol or gas-powered engines by a cleaning device including a cleaning head for feeding a heated liquid cleaning fluid under pressure through the openings of a solid particle filter or catalytic converter, which method comprising the following stages:
- determining the type, size and degree of foulness of the solid particulate filter or catalytic converter;
- fixing the one end of the solid particulate filter or catalytic converter to the cleaning head of the cleaning device;
- setting the cleaning device a temperature of the cleaning fluid of about 40°C to about 90°C, preferably 60°C to 80°C;
- washing for 10-20 minutes, preferably 15 minutes, by feeding a heated to the set temperature cleaning fluid under pressure of about 1.25 bar to about 2.5 bar through a nozzle of the cleaning head into the opening of one end of the filter for solid particles or the catalytic converter;
- reversing the direction of washing by rotating the solid particulate filter or catalytic converter and attaching of its other end to the cleaning head and washing with a cleaning fluid under pressure at the said set temperature for 10-20 minutes, preferably 15 minutes;
- controlling the contamination of the outgoing cleaning fluid at the outlet of the cleaned solid particle filter or catalytic converter and repeating the said washing stages to obtain a clear outgoing cleaning fluid;
- rinsing for 15-20 minutes by supplying clean water at ambient temperature through the nozzle of the cleaning head;
- visual inspection of the degree of cleaning and repetition of the aforementioned cleaning stages if necessary;
- drying the rinsed filter for 10-15 minutes by feeding air through the nozzle of the cleaning head.

11. The cleaning method according to Claim 10, **characterized in that** the cleaning fluid is an aqueous solution of citric acid in a proportion of 100 g to 200 g, preferably 150 g citric acid per 10 liters of water.

12. The cleaning method according to Claim 10, **characterized in that** the cleaning fluid is an aqueous solution of citric acid and phosphoric acid in a proportion of 80 g to 160 g, preferably 120 g citric acid and 20 g to 40 g, preferably 30 g phosphoric acid per 10 liters of water.

13. The cleaning method according to any of Claims from 10 to 12, **characterized in that** the determination of the temperature and pressure of the cleaning fluid is based on the foulness of the cleaned object, and in case of highly contaminated filters, a temperature of 70°C to 80°C and a pressure of about 2.5 bar is selected, and in case of slightly and moderately contaminated filters, a temperature of 60°C to 65°C and a pressure of 1.25 bar is selected.

14. A cleaning method according to any of Claims from 10 and 13, **characterized in that** the cleaning continues for at least one hour and includes four washing stages of 15 minutes, alternating a washing stage on one side of the filter or the catalytic converter and a washing stage on the other side of the filter or catalytic converter.

15. A cleaning method according to any of Claims from 10 to 14, **characterized in that** in the washing stage at 15 to 30 seconds intervals to the cleaning fluid into the cleaning head for 1 to 3 seconds is fed air under pressure of about 5 to 8 bar.

16. A cleaning method according to any of Claims from 10 to 15, **characterized in that** the check of the foulness and the degree of cleaning of the filter or catalytic converter is provided by an endoscopic camera.
